# EUROPÄISCHE PATENTSCHRIFT

(11) **EP 4 330 777 B1**
(45) Veröffentlichungstag und Bekanntmachung des Hinweises auf die Patenterteilung: **21.05.2025**
(21) Anmeldenummer: 22725777.1
(22) Anmeldetag: 26.04.2022
(51) Int. Cl.: G05B 19/042

(54) **VENTILSTEUERGERÄT**
VALVE CONTROL DEVICE
APPAREIL DE COMMANDE DE SOUPAPE

(30) Priorität: 30.04.2021 DE 102021002287
(43) Veröffentlichungstag der Anmeldung: 06.03.2024
(73) Patentinhaber: GEA Tuchenhagen GmbH, 21514 Büchen (DE)
(72) Erfinder: STENDER, Heiko, 23562 Lübeck (DE); BUCHMANN, Konstantin, 22765 Hamburg (DE)
(74) Vertreter: Hauck Patentanwaltspartnerschaft mbB
(86) Internationale Anmeldenummer: PCT/EP2022/061037
(87) Internationale Veröffentlichungsnummer: WO 2022/229176

(56) Entgegenhaltungen:
- EP-A1- 2 597 779
- CN-A- 103 075 536
- US-A1- 2016 018 829
- US-A1- 2017 218 601

## Beschreibung

Die Erfindung betrifft ein Ventilsteuergerät nach dem Oberbegriff des ersten Anspruchs und ein Verfahren nach dem Oberbegriff des achten Anspruchs.

Ventile werden in Anlagen zur Herstellung von Lebensmitteln, Getränken, Medikamenten und feinchemischen Produkten sowie in der Biotechnologie eingesetzt. Aufgrund der Größe solcher Anlagen und dem Automatisierungsgrad sind die Ventile oftmals mit an ihnen angebrachten Ventilsteuergeräten ausgestattet.

Eine Kombination aus Ventil und Ventilsteuergerät ist in der WO 2006/084541 A1 vorgestellt. Das Ventilsteuergerät sorgt einerseits für eine Schaltung des Ventilzustandes, beispielsweise zwischen den Zuständen "offen", in dem ein Fluidfluss durch das Ventil ermöglicht ist, oder "geschlossen", in dem der Fluidfluss unterbunden ist.

Das Ventilsteuergerät steuert einerseits den oftmals, aber nicht zwingend, pneumatisch ausgeführten Antrieb. Bei dieser Steuerung ist wenigstens ein so genanntes Pilotventil vorgesehen, welches Pneumatikluft in den Antrieb strömen lassen kann, um diesen zu aktivieren und damit den Schaltzustand des Ventils zu verändern.

Neben dieser Schaltfunktion ist das Ventilsteuergerät mit einer Sensorik ausgestattet, die es erlaubt, den Schaltzustand des Ventils zu bestimmen.

Das Ventilsteuergerät besitzt eine Kommunikationsschnittstelle, um Steuerbefehle beispielsweise über einen Bus von einer Anlagensteuerung zu empfangen und den Schaltzustand an diese zu melden. Die WO 2006/084541 A1 beschreibt hierzu einen günstigen Aufbau, um verschiedene Busstandards bereitstellen zu können.

Jüngeren Datums ist die Verwendung von Nahfeldkommunikationsschnittstellen im Zusammenhang mit Feldgeräten, beispielsweise Ventilsteuergeräten. Die Nahfeldkommunikation wird eingesetzt, um direkt, oder an im Falle eines schwer zugänglich verbauten Feldgeräts über ein Relais, in der Nähe des Feldgeräts mit diesem zu kommunizieren, ohne über die Anlagensteuerung gehen zu müssen. Dies ist beispielsweise bei Wartungs- und Kontrollarbeiten notwendig. Eine solche Anordnung ist beispielsweise aus der WO 2020/114719 A1 bekannt.

US 2017/0218601 A1 beschreibt eine Steuerung zum Einstellen des Ausgangsdrucks eines Druckreduzierventils für eine Wasserversorgung. Dabei kann die Kommunikation zwischen Komponenten der beschriebenen Steuerung über drahtgebundene Verbindungen, einen BUS, FireWire, LAN oder WAN, optische Faserverbindungen, drahtlose Kommunikation über kurze Abstände, wie Infrarot, induktive Kopplung, Bluetooth, WiFi oder über Kommunikation über große Abstände mit geeigneten Radiofrequenzen und Protokollen oder Mobilnetzwerke unter Verwendung von beispielsweise SMS erfolgen.

US 2016/0018829 A1 und CN 103075536 A beschreiben Ventilsteuergeräte, bei denen eine Nahfeldkommunikation oder Kommunikation über einen BUS erfolgen kann.

EP 2 597 779 A1 beschreibt eine Nahfeldkommunikationsvorrichtung, die beispielsweise in elektronischen Fahrkartensystemen zum Einsatz kommen kann. Bei Wartungsarbeiten ist dafür Sorge zu tragen, dass ein Ventil einen für die Arbeiten notwendigen Schaltzustand erreicht und beibehält, solange die Arbeiten in Gang sind. Ungewollte Schaltungen sind zu vermeiden.

Es war daher Aufgabe, ein Ventilsteuergerät zu schaffen, welches sichere Wartungsarbeiten am Ventil erlaubt.

Diese Aufgabe wird gelöst durch ein Ventilsteuergerät gemäß Anspruch 1 und ein Verfahren gemäß Anspruch 8. In den abhängigen Ansprüchen sind vorteilhafter Weiterbildungen angegeben.

Ausgegangen wird von einem Ventilsteuergerät mit wenigstens einer Schaltstufe, einer Steuerelektronik zur Ansteuerung der Schaltstufe und einer BUS-Schnittstelle zur Kommunikation mit einer übergeordneten Anlagensteuerung einer Prozessanlage.

BUS umfasst in diesem Zusammenhang die gängigen Bussysteme der Automatisierungstechnik im Anlagenbau einschließlich der Parallelverdrahtung, in welcher die einzelnen Geräte direkt an die Anlagensteuerung angeschlossen sind.

In diesem Ventilsteuergerät ist nun eine Nahfeldkommunikationsschnittstelle vorgesehen, und die Steuerelektronik ist eingerichtet, einem über die Nahfeldkommunikationsschnittstelle eingehenden Steuerbefehl Vorrang zur Ansteuerung der Schaltstufe einzuräumen. Vorrang bedeutet, dass sich die Steuerelektronik in einem Betriebszustand befindet, in welchem ausschließlich ein über die Nahfeldkommunikationsschnittstelle eingehender Befehl benutzt wird, um die Schaltstufe wirksam anzusteuern. Ein gleichzeitig von der Anlagensteuerung über die Bus-Schnittstelle eingehender Befehl kommt in diesem Betriebszustand nicht zur Anwendung. Dies ist unabhängig davon, ob zeitgleich noch eine Rückmeldung, beispielsweise des Schaltzustandes des Ventils, an die Anlagensteuerung erfolgt. Der von der Anlagensteuerung eingehende Befehl kann dem Bediener trotzdem als Hinweis über das Zugangsgerät signalisiert werden.

Für ein Verfahren zum Betrieb einer Anordnung mit einem Ventilsteuergerät, welches eine erste Nahfeldkommunikationsschnittstelle und eine Bus-Schnittstelle umfasst, und einem Zugangsgerät mit einer zweiten Nahfeldkommunikationsschnittstelle, wird vorgeschlagen, dass in einem Schritt zwischen erster und zweiter Nahfeldkommunikationsschnittstelle eine Nahfeldverbindung hergestellt wird. In einem weiteren Schritt wird über die Nahfeldverbindung ein Steuerbefehl gesendet. Ein zusätzlicher Schritt beinhaltet, dass diesem Steuerbefehl Vorrang gegenüber einem Befehl eingeräumt wird, der vom Ventilsteuergerät über die Bus-Schnittstelle empfangen wird.

Der Antrieb kann elektrisch ausgeführt sein. Dann umfasst die Schaltstufe ein elektronisches Schaltmittel wie beispielsweise einen Thyristor, um die Bestromung eines Leistungsteiles, beispielsweise eines Elektromotors, zu schalten.

Der Antrieb kann hydraulisch oder pneumatisch ausgeführt sein. Dann umfasst die Schaltstufe wenigstens ein Pilotventil, mit welchem die Zufuhr von Hydraulikmittel oder Pneumatikmittel zum Antrieb geschaltet wird. In dieser Ausführung ist ein Ventilsteuergerät mit einem Pilotventil, einer Steuerelektronik zur Ansteuerung des Pilotventils und einer Bus-Schnittstelle zur Kommunikation mit einer Anlagensteuerung einer Prozessanlage vorgesehen. Zur Lösung der Aufgabe ist im Ventilsteuergerät eine Nahfeldkommunikationsschnittstelle vorgesehen, und die Steuerelektronik eingerichtet, einem über die Nahfeldkommunikationsschnittstelle eingehenden Steuerbefehl Vorrang zur Ansteuerung des Pilotventils einzuräumen.

Die Einrichtung des Ventilsteuergeräts für diese Funktionalität kann einen Selektor im Ventilsteuergerät umfassen, mittels welchem Selektor ein über die Nahfeldkommunikationsschnittstelle eingehender Steuerbefehl zur Ausführung auswählbar ist. Der Selektor kann als Schaltkreis oder als in eine Softwareroutine ausgeführt sein, welche Softwareroutine mittels eines im Ventilsteuergerät vorgesehenen Mikroprozessors ausführbar ist. Der Selektor kann als Teil der Steuerelektronik oder als eigenständiges Modul ausgeführt sein.

Auf diese Weise ist sichergestellt, dass der Bediener vor Ort den Schaltzustand des Ventils vollständig unter Kontrolle hat. Eine Schaltung durch die Anlagensteuerung wird zu diesem Zeitpunkt unterdrückt.

In einer Anordnung, die ein Ventilsteuergerät und ein Zugangsgerät umfasst, ist die Nahfeldkommunikationsschnittstelle des Ventilsteuergeräts mit einer

Nahfeldkommunikationsschnittstelle eines Zugangsgeräts verbindbar. Das Zugangsgerät ist mechanisch und lösbar mit dem Ventilsteuergerät verbindbar. Zur mechanischen Verbindung kann eine Kupplung vorgesehen sein, die beispielsweise auf magnetischem Wirkprinzip beruht oder als Saugnapf gestaltet ist.

Das oben genannten Verfahren wird vorteilhaft um einen Verfahrensschritt ergänzt, in welchem zwischen Ventilsteuergerät und Zugangsgerät eine mechanische Verbindung hergestellt wird. Hierdurch wird gewährleistet, dass die richtigen Geräte miteinander gekoppelt sind und die Datenkopplung durch mechanische Kopplung abgesichert ist.

Dieser Vorteil wird vertieft, wenn gemäß einer Weiterbildung eine Nahfeldkommunikation zwischen erster und zweiter Nahfeldkommunikationsschnittstelle hergestellt ist, wenn die mechanische Verbindung besteht.

Vorzugsweise besitzt das Zugangsgerät ein Anzeigenfeld und wenigstens eine Taste zur Bedienung. Über die drahtlose Datenverbindung der Nahfeldkommunikationsschnittstellen sind Daten austauschbar, beispielsweise Steuerbefehle zur Änderung der Ventilstellung, Mess- und Zustandsdaten, beispielsweise Ventilstellung. Unter Steuerbefehl fällt auch ein Befehl, mit dem eine Sensorkalibrierung gestartet wird, auch "Teach-In" genannt. Die Daten können auch zum Parametrieren oder Konfigurieren des Ventilsteuergeräts geeignet sein. Es kann sich bei den Daten beispielsweise um ein Firmware-Update handeln. Es können auch über einen Zeitraum im Ventilsteuergerät erfasste Zustandsdaten über die Nahfeldkommunikation abrufbar sein.

Da die Steuerelektronik Steuerbefehle benutzt, die über die Nahfeldkommunikationsschnittstelle eingehen, um eine gewünschte Ventilstellung zu bewirken, wirkt das Zugangsgerät als Bedieneinheit, um die Ventilstellung unabhängig von der Anlagensteuerung einzustellen. Dies ist bei Wartungsarbeiten sehr hilfreich, weil der Servicetechniker direkt am Ventil dessen Zustand einstellen kann und keine Interaktion mit der Anlagensteuerung benötigt.

Das Zugangsgerät kann eingerichtet sein, eine Passwortabfrage auszuführen, mit dem dieses gegen unbefugte Bedienung gesichert ist. Diese Passwortabfrage kann von der Anlagensteuerung über den Bus, die Busschnittstellen und die miteinander verbundenen Nahfeldkommunikationsschnittstellen bewirkt werden.

Es kann vorgesehen sein, dass das Zugangsgerät das Ventilsteuergerät gegen die Anlagensteuerung sperrt. Dies macht beispielsweise Wartungsarbeiten sicherer. Um dies zu erreichen, ist vorgesehen, dass die Steuerelektronik eingerichtet ist, gemäß einem über die Nahfeldkommunikationsschnittstelle eingehenden Blockierungsbefehl über die Bus-Schnittstelle sendbaren Steuerbefehle der Anlagensteuerung zu blockieren.

Das Zugangsgerät kann neben Bedienelementen und der Nahfeldkommunikationsschnittstelle wenigstens eine Fernfeldkommunikationsschnittstelle besitzen, beispielsweise auf WiFi- oder WLAN-Standard basierend. Über die Fernfeldkommunikationsschnittstelle kann eine Kommunikation, beispielsweise vom Bediener ausgelöst, über das Internet mit einem Server erfolgen. Es kann eine Verbindung zu einem mobilen Bediengerät erstellt werden. Dieses mobile Bediengerät, beispielsweise ein Tablet oder ein Mobiltelefon, kann über das Zugangsgerät Steuerbefehle an das Ventilgerät senden, die eine Ansteuerung des wenigstens einen Pilotventils und darüber des Antriebs bewirken.

Das Ventilsteuergerät kann ein Anzeigeelement, beispielsweise eine Leuchtdiode, besitzen, mit dem eine Datenübertragung über die Nahfeldkommunikationsschnittstelle angezeigt wird.

Vorteilhaft ist es, das Ventilsteuergerät mit einem manuellen Steuerelement auszustatten, welches einem Bediener erlaubt, das Pilotventil oder die Pilotventile zur Ansteuerung des Antriebs per Hand unabhängig von und überrangig zu den von Anlagensteuerung oder Zugangsgerät stammenden Steuerbefehlen zu betätigen. Durch die sich so ergebende Rangfolge der Steuerbefehle ist höchste Sicherheit bei den Wartungsarbeiten im Umfeld und an dem Ventil gegeben. Die höchste Priorität hat das manuelle Steuerelement, gefolgt von dem Zugangsgerät, welches eine höhere Priorität als die Anlagensteuerung besitzt.

Anhand eines Ausführungsbeispiels und seiner Weiterbildung sollen die Erfindung erläutert und die Darstellung ihrer Vorteile vertieft werden.

Es zeigen:
- **Fig. 1:**: Schematische Darstellung einer Anordnung mit einem Ventilsteuergerät;
- **Fig. 2:**: Schematische Darstellung einiger Baugruppen in Zugangsgerät und Ventilsteuergerät.

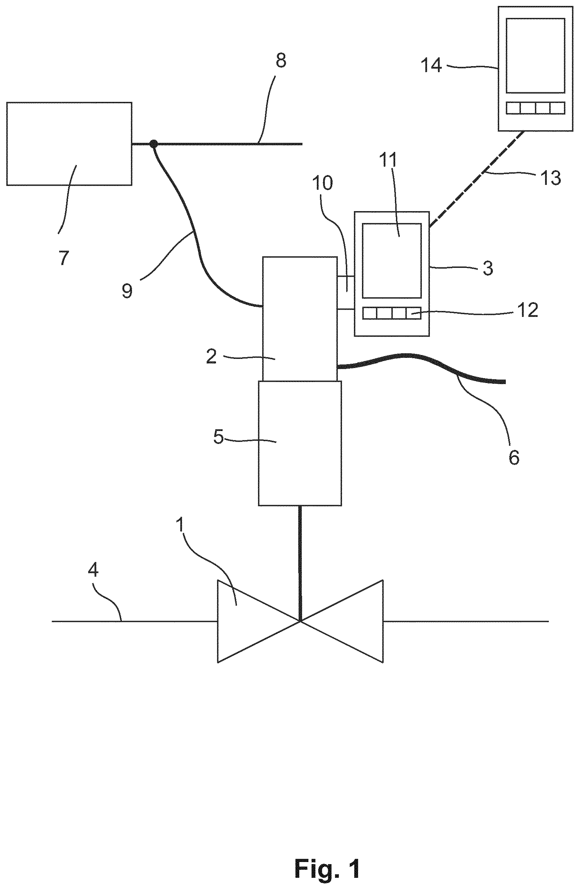

In Fig. 1 ist eine Anordnung mit einem Ventil 1, einem Ventilsteuergerät 2 und einem Zugangsgerät 3 schematisch dargestellt. Das Ventil 1 kann ein in eine Leitung 4 einer Prozessanlage, insbesondere der eingangs genannten Industriefelder, eingesetztes Absperrventil sein. Es kann sich auch um ein Regelventil, Doppelsitzventil, Umschaltventil oder dergleichen handeln, soweit der Ventiltyp in diesem Anwendungsgebiet Verwendung findet.

Zwischen Ventil 1 und Ventilsteuergerät 2 ist ein Antrieb 5 angeordnet. Dieser Antrieb ist in diesem Ausführungsbeispiel druckmittelbetrieben ausgeführt, insbesondere pneumatisch. Der Antrieb bewirkt eine Stellungsänderung eines im Schema nicht dargestellten Schließkörpers des Ventils 1, so dass sich ein Schaltzustand des Ventils 1 ändert. Insbesondere kann das Ventil 1 den Fluidfluss durch die Leitung 4 in einer Schließstellung sperren oder in einer Offenstellung freigeben.

Der Antrieb 5 wird vom Ventilsteuergerät 2 aktiviert. Im Falle eines pneumatischen Antriebs geschieht das über Druckluft, die in den Antrieb 5 eingelassen wird, um dort einen Kolben zu bewegen, welcher mit dem Schließkörper im Ventil 1 wirkverbunden ist. Die Druckluft wird einer Druckmittelzuleitung 6 entnommen

Für den Regelbetrieb ist das Ventilsteuergerät 2 mit einer Anlagensteuerung 7 verbunden. Diese Verbindung kann über einen Bus 8 der Prozessanlage verwirklicht sein, an den das Ventilsteuergerät 2 mit einer Busverbindung 9 zum Datenaustausch angebunden ist. Oft sind Bus 8 und Busverbindung 9 kabelgebunden ausgeführt. Der Datenaustausch umfasst insbesondere Steuerbefehle, die vom Ventilsteuergerät 2 in einer Änderung des Schaltzustandes des Ventils 1 umgesetzt werden. Weiterer Teil der Daten kann beispielsweise die Meldung des aktuellen Schaltzustandes sein.

Das Zugangsgerät 3 ist mechanisch und lösbar an das Ventilsteuergerät 2 gekoppelt. Hierzu ist eine mechanische Kupplung 10 vorgesehen. Die mechanische Kupplung kann beispielsweise auf magnetischem Wirkprinzip beruhen oder als Saugnapf gestaltet sein. Die mechanische Kupplung 10 kann Teile am Ventilsteuergerät 2 und dem Zugangsgerät 3 umfassen. Alternativ, beispielsweise in der Ausführung mit Saugnapf, kann die mechanische Kupplung 10 komplett an Ventilsteuergerät 2 oder Zugangsgerät 3 angeordnet sein.

Das Zugangsgerät 3 weist Bedien- und Anzeigeelemente auf, beispielsweise ein Anzeigefeld 11 und wenigstens eine Taste 12. Die Bedien- und Anzeigeelemente sind an die im Zugangsgerät 3 zu bearbeitenden und anzuzeigenden Daten und Steuerbefehle sowie an die Anwendungsumgebung, beispielsweise an ein hygienisches und reines Aufstellgebiet, angepasst. Denkbar ist beispielsweise auch ein Touchscreen.

Das Zugangsgerät kann so ausgeführt sein, dass es zum Datentransfer 13 mit einem mobilen Bediengerät 14 verbindbar ist. Bei diesem mobilen Bediengerät 14 kann es sich um ein Tablet, ein Smartphone, einem Laptop oder dergleichen handeln.

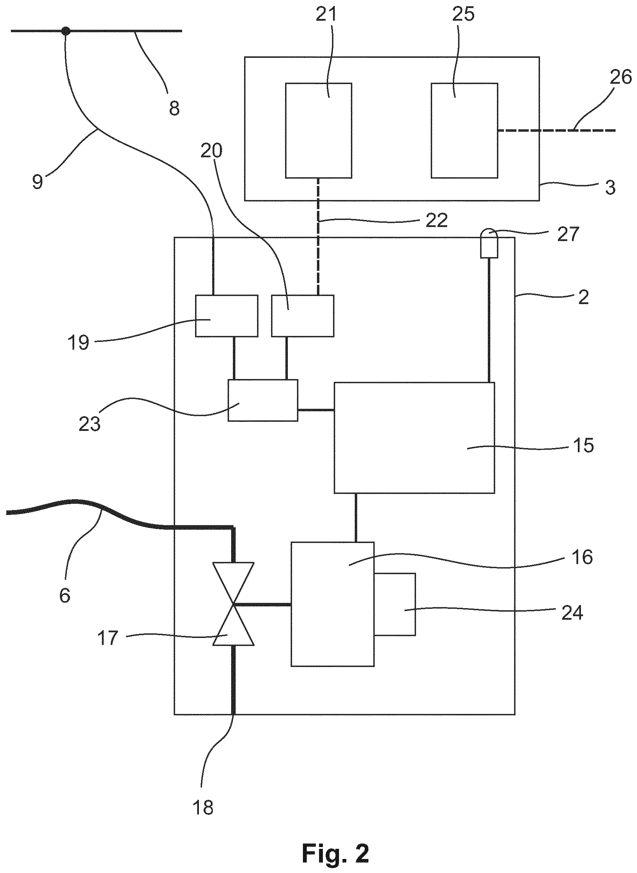

In Fig. 2 sind funktionelle Baugruppen des Ventilsteuergeräts 2 und des Zugangsgeräts 3 schematisch dargestellt.

Kern des Ventilsteuergeräts 2 ist eine Steuerelektronik 15. Diese wirkt mit einem Treiber 16 zusammen, mittels welchem die Schaltstellung eines Pilotventil 17 zwischen offen und geschlossen veränderbar ist. Das Pilotventil 17 übernimmt in diesem Ausführungsbeispiel die Funktion einer Schaltstufe. Die Schaltstellung des Pilotventils 17 bestimmt, ob aus der Druckmittelzuleitung 6 Druckmittel zum Druckmittelausgang 18 gelangt, welcher mit dem Antrieb 5 fluidverbunden ist. Der Treiber 16 kann beispielsweise auf elektromagnetischer Grundlage gestaltet sein.

Die Ansteuerung des Pilotventils 17 erfolgt gemäß Steuerbefehlen der Anlagensteuerung 7. Diese Steuerbefehle werden über den Bus 8 an das Ventilsteuergerät 2 übermittelt. Die Busverbindung 9 ist mit einer Busschnittstelle 19 im Ventilsteuergerät 2 wirkverbunden. Die Busschnittstelle 19 übermittelt die Steuerbefehle gegebenenfalls in angepasster Form an die Steuerelektronik 15.

Das Ventilsteuergerät 2 weist neben der Busschnittstelle 19 eine erste Nahfeldkommunikationsschnittstelle 20 auf.

Eine zweite Nahfeldkommunikationsschnittstelle 21 ist im Zugangsgerät 3 vorgesehen.

Zwischen erster und zweiter Nahfeldkommunikationsschnittstelle 20 und 21 ist eine Nahfeldverbindung 22 zur Übertragung von Daten, insbesondere Stellbefehlen, herstellbar. Vorteil einer solchen Nahfeldverbindung 22 ist, dass sie eine sichere Kommunikation zwischen Ventilsteuergerät 2 und Zugangsgerät 3 darstellt. Dabei kommunizieren gezielt die beiden, beispielsweise durch Wirkung der mechanischen Kupplung 10, in mechanischen Kontakt gebrachten Geräte. Eine Beeinflussung von Drittgeräten, beispielsweise den Ventilsteuergeräten benachbarter Ventile, wird so verhindert. Durch die Nahfeldkommunikation ist eine Beeinflussung von benachbarten Geräten in weiten Teilen unmöglich.

Im Ventilsteuergerät ist ein Selektor 23 in Wirkverbindung mit der Busschnittstelle 19 und der ersten Nahfeldkommunikationsschnittstelle 21 vorgesehen. Dieser Selektor 23 kann eine eigenständige Baugruppe sein, beispielsweise auf Grundlage von Logikbausteinen. Alternativ kann er Teil der Steuerelektronik 15 sein. Unabhängig von der Position kann er auch als Software ausgeführt sein.

Der Selektor 23 ist eingerichtet, einen Steuerbefehl zur Änderung der Schaltstellung des Ventils 1, der eine Aktivierung des Pilotventils 17 bewirkt, gemäß einer festgelegten Rangordnung zur Ausführung an die Steuerelektronik 15 zu übermitteln. Gehen zeitgleich oder zeitlich benachbart gleichartige Steuerbefehle über Busschnittstelle 19 und erste Nahfeldschnittstelle 20 ein, so wird nur derjenige an die Steuerelektronik 15 zur Abarbeitung weitergegeben, der über die Nahfeldschnittstelle 20 eingeht. Hierdurch wird das Ventil 1 sicher für einen Bediener im unmittelbaren räumlichen Umfeld des Ventils 1 schaltbar.

Es ist vorteilhaft, ein manuelles Steuerelement 24 vorzusehen, mit welchem das Pilotventil 17 vom Bediener händisch schaltbar ist. Dieses manuelle Steuerelement 24 betätigt das Pilotventil 17 unabhängig von Stellkommandos, die von der Steuerelektronik 15 eingehen. Damit ist das manuelle Steuerelement 24 höchstrangig. Vorzugsweise ist es nur für den Bediener zugänglich, wenn ein Gehäuse des Ventilsteuergeräts 2 geöffnet ist. Soweit mehrere Pilotventile 17 vorhanden sind, können mehrere manuelle Steuerelemente 24 vorgesehen sein, wobei jeweils eines einem Pilotventil 17 zugeordnet ist.

Neben der Ansteuerung des Pilotventils 17 kann das Zugangsgerät 3 zum Ausführen weiterer Funktionen ausgeführt sein, die im Zusammenspiel mit dem entsprechend ausgeführten Ventilsteuergerät 2 umsetzbar sind.

Beispielsweise können aus einem im Ventilsteuergerät vorgesehenen Fehlerspeicher Fehler- und Diagnosedaten ausgelesen und zur Anzeige gebracht werden. Der Hub kann eingestellt werden, sowie Toleranzen der Stellungswerte des Ventilschließglieds ausgelesen und eingestellt werden. Das Zugangsgerät 3 kann als Datenlogger wirken.

Das Zugangsgerät 3 kann eine Fernfeldkommunikationsschnittstelle 25 umfassen, mit welcher eine Fernfeldverbindung 26 zu einem weiteren Gerät herstellbar ist, beispielsweise dem mobilen Bediengerät 14. Die Fernfeldverbindung kann auf einem WLAN- und WiFi-Standard beruhen. Über die Fernfeldverbindung kann ein Datenaustausch mit Geräten im Internet erfolgen, beispielsweise eine Übertragung von Fehlerprotokollen und Parametern, die eine Bestellung von Ersatzteilen erlauben und bewirken.

Das Ventilsteuergerät kann ein Anzeigeelement 27 besitzen, welches für den Bediener sichtbare, beispielsweise optische, Signale sendet. Dieses Anzeigeelement 27 kann beispielsweise genutzt werden, um eine aktive Datenübertragung über die Nahfeldverbindung anzuzeigen. In einer kostengünstigen Ausführung umfasst das Anzeigeelement 27 eine Leuchtdiode.

Die Anhand der Fig. 1 und Fig. 2 erläuterte Anordnung mit einem Ventilsteuergerät 2 und einem Zugangsgerät 3 wird vorzugsweise mit einem Verfahren betrieben, das im Kern folgende Schritte umfasst:
- zwischen der erste Nahfeldkommunikationsschnittstelle 20 am Ventilsteuergerät 2 und der zweite Nahfeldkommunikationsschnittstelle 21 am Zugangsgerät 3 wird eine Nahfeldverbindung 22 hergestellt,
- über die Nahfeldverbindung 22 wird ein Steuerbefehl gesendet,
- diesem Steuerbefehl wird Vorrang gegenüber einem Befehl eingeräumt, der vom Ventilsteuergerät 2 über die Bus-Schnittstelle 19 empfangen wird.

Durch dieses Verfahren kann ein Bediener der Anordnung, der beispielsweise Wartungsarbeiten durchführen will, den Schaltzustand des Ventils durch Verwendung eines Zugangsgeräts 3 für sich passend einstellen. Dabei wird vorteilhaft für die Dauer der Nahfeldverbindung 22 vermieden, dass der Schaltzustand über die Bus-Schnittstelle 19 vom Bediener ungewollt verändert wird. Dies erhöht die Sicherheit für den Bediener.

Um gezielt ein bestimmtes Ventilsteuergerät 2 in den vom Bediener gewünschten Zustand zu bringen und in diesem sicher zu halten, kann als zusätzlicher Schritt vorgesehen sein, dass zwischen Ventilsteuergerät 2 und Zugangsgerät 3 eine mechanische Verbindung hergestellt wird.

Die Sicherheit wird weiter erhöht, wenn das Verfahren zudem umfasst, dass eine Nahfeldverbindung 22 zwischen erster und zweiter Nahfeldkommunikationsschnittstelle 20 und 21 hergestellt ist, wenn die mechanische Verbindung besteht.

### Bezugszeichenliste

- 1: Ventil
- 2: Ventilsteuergerät
- 3: Zugangsgerät
- 4: Leitung
- 5: Antrieb
- 6: Druckmittelzuleitung
- 7: Anlagensteuerung
- 8: Bus
- 9: Busverbindung
- 10: mechanische Kupplung
- 11: Anzeigefeld
- 12: Taste
- 13: Datentransfer
- 14: Mobiles Bediengerät
- 15: Steuerelektronik
- 16: Treiber
- 17: Pilotventil
- 18: Druckmittelausgang
- 19: Busschnittstelle
- 20: erste Nahfeldkommunikationsschnittstelle
- 21: zweite Nahfeldkommunikationsschnittstelle
- 22: Nahfeldverbindung
- 23: Selektor
- 24: manuelles Steuerelement
- 25: Fernfeldkommunikationsschnittstelle
- 26: Fernfeldverbindung
- 27: Anzeigeelement

## Patentansprüche

1. Ventilsteuergerät mit einer Schaltstufe, einer Steuerelektronik (15) zur Ansteuerung der Schaltstufe und einer Bus-Schnittstelle (19) zur Kommunikation mit einer Anlagensteuerung (7) einer Prozessanlage, **dadurch gekennzeichnet, dass** im Ventilsteuergerät (2) eine Nahfeldkommunikationsschnittstelle (20) vorgesehen ist, und die Steuerelektronik (15) eingerichtet ist, einem über die Nahfeldkommunikationsschnittstelle (20) eingehenden Steuerbefehl Vorrang zur Ansteuerung der Schaltstufe einzuräumen.

2. Ventilsteuergerät nach Anspruch 1, **dadurch gekennzeichnet, dass** ein Selektor (23) vorgesehen ist, welcher Steuerbefehle, die über die Nahfeldkommunikationsschnittstelle (20) eingehen, vorrangig gegenüber der Bus-Schnittstelle (19) an die Steuerelektronik (15) übermittelt.

3. Ventilsteuergerät nach Anspruch 1, **dadurch gekennzeichnet, dass** die Steuerelektronik (15) eingerichtet ist, gemäß einem über die Nahfeldkommunikationsschnittstelle (20) eingehenden Blockierungsbefehl über die Bus-Schnittstelle (19) sendbaren Steuerbefehle der Anlagensteuerung (7) zu blockieren.

4. Ventilsteuergerät nach einem der vorhergehenden Ansprüche, **dadurch gekennzeichnet, dass** die Schaltstufe ein Pilotventil (17) umfasst.

5. Ventilsteuergerät nach Anspruch 4, **dadurch gekennzeichnet, dass** ein manuelles Steuerelement (24) vorgesehen ist, mittels welchem das Pilotventil (17) die Steuerelektronik (15) überstimmend ansteuerbar ist.

6. Anordnung mit einem Ventilsteuergerät (2) nach einem der vorhergehenden Ansprüche und einem Zugangsgerät (3), **dadurch gekennzeichnet, dass** das Zugangsgerät (3) eine zweite Nahfeldkommunikationsschnittstelle (21) umfasst und mit dem Ventilsteuergerät (2) mechanisch verbindbar ist.

7. Anordnung nach Anspruch 6, **dadurch gekennzeichnet, dass** das Zugangsgerät (3) eine Fernfeldkommunikationsschnittstelle (25) aufweist.

8. Verfahren zum Betrieb einer Anordnung mit einem Ventilsteuergerät (2), welches eine erste Nahfeldkommunikationsschnittstelle (20) und eine Bus-Schnittstelle (19) umfasst, und einem Zugangsgerät (3) mit einer zweiten Nahfeldkommunikationsschnittstelle (21), **dadurch gekennzeichnet, dass** zwischen erster und zweiter Nahfeldkommunikationsschnittstelle (20, 21) eine Nahfeldverbindung (22) hergestellt wird, über die Nahfeldverbindung (22) ein Steuerbefehl gesendet wird, und diesem Steuerbefehl Vorrang gegenüber einem Befehl eingeräumt wird, der vom Ventilsteuergerät (2) über die Bus-Schnittstelle (19) empfangen wird.

9. Verfahren nach Anspruch 8, **dadurch gekennzeichnet, dass** zwischen Ventilsteuergerät (2) und Zugangsgerät (3) eine mechanische Verbindung hergestellt wird.

10. Verfahren nach Anspruch 9, **dadurch gekennzeichnet, dass** eine Nahfeldverbindung (22) zwischen erster und zweiter Nahfeldkommunikationsschnittstelle (20, 21) hergestellt ist, wenn die mechanische Verbindung besteht.

## Claims

1. A valve control device having a switching stage, control electronics (15) for controlling the switching stage and a bus interface (19) for communication with a plant controller (7) of a processing plant, **characterized in that** a near-field communication interface (20) is provided in the valve control device (2) and the control electronics (15) are designed to give priority to a control command arriving via the near-field communication interface (20) for controlling the switching stage.

2. The valve control device according to claim 1, **characterized in that** a selector (23) is provided, said selector transmitting control commands, which arrive via the near-field communication interface (20), to the control electronics (15) with priority over the bus interface (19).

3. The valve control device according to claim 1, **characterized in that** the control electronics (15) are designed to block control commands of the plant controller (7), which can be transmitted via the bus interface (19), according to a blocking command arriving via the near-field communication interface (20).

4. The valve control device according to one of the preceding claims, **characterized in that** the switching stage comprises a pilot valve (17).

5. The valve control device according to claim 4, **characterized in that** a manual control element (24) is provided, the pilot valve (17) being able to be controlled thereby so as to override the control electronics (15).

6. An arrangement having a valve control device (2) according to one of the preceding claims and an access device (3), **characterized in that** the access device (3) comprises a second near-field communication interface (21) and can be mechanically connected to the valve control device (2).

7. The arrangement according to claim 6, **characterized in that** the access device (3) has a far-field communication interface (25).

8. A method for operating an arrangement having a valve control device (2), which comprises a first near-field communication interface (20) and a bus interface (19), and an access device (3) having a second near-field communication interface (21), **characterized in that** a near-field connection (22) is established between the first and the second near-field communication interface (20, 21), a control command is transmitted via the near-field connection (22) and priority is given to this control command over a command which is received by the valve control device (2) via the bus interface (19).

9. The method according to claim 8, **characterized in that** a mechanical connection is established between the valve control device (2) and the access device (3).

10. The method according to claim 9, **characterized in that** a near-field connection (22) is established between the first and the second near-field communication interface (20, 21) when the mechanical connection is present.

## Revendications

1. Appareil de commande de soupape comprenant un étage de commutation, une électronique de commande (15) pour l'actionnement de l'étage de commutation et une interface de bus (19) pour la communication avec une commande d'installation (7) d'une installation de traitement, **caractérisé en ce que** dans l'appareil de commande de soupape, il est prévu une interface de communication en champ proche (20), et l'électronique de commande (15) est configurée pour accorder la priorité à un ordre de commande reçu par le biais de l'interface de communication en champ proche (20) pour l'actionnement de l'étage de commutation.

2. Appareil de commande de soupape selon la revendication 2, **caractérisé en ce qu'**il est prévu un sélecteur (23), lequel transmet des ordres de commande à l'électronique de commande (15) par le biais de l'interface de communication en champ proche (20) de manière prioritaire par rapport à l'interface de bus (19).

3. Appareil de commande de soupape selon la revendication 1, **caractérisé en ce que** l'électronique de commande (15) est configurée pour bloquer des ordres de commandes de la commande d'installation (7) susceptibles d'être émis par le biais de l'interface de bus (19), conformément à un ordre de blocage reçu par le biais de l'interface de communication en champ proche (20).

4. Appareil de commande de soupape selon l'une des revendications précédentes, **caractérisé en ce que** l'étage de commutation comporte une soupape pilote (17).

5. Appareil de commande de soupape selon la revendication 4, **caractérisé en ce qu'**il est prévu un élément de commande manuel (24), au moyen duquel la soupape pilote (17) peut être actionnée en accord avec l'électronique de commande (15).

6. Agencement comprenant un appareil de commande de soupape (2) selon l'une des revendications précédentes et un appareil d'accès (3), **caractérisé en ce que** l'appareil d'accès (3) comporte une deuxième interface de communication en champ proche (21) et peut être relié mécaniquement à l'appareil de commande de soupape (2).

7. Agencement selon la revendication 6, **caractérisé en ce que** l'appareil d'accès (3) présente une interface de communication en champ lointain (25).

8. Procédé de fonctionnement d'un agencement comprenant un appareil de commande de soupape (2), lequel comporte une première interface de communication en champ proche (20) et une interface de bus (19), et un appareil d'accès (3) comprenant une deuxième interface de communication en champ proche (21), **caractérisé en ce qu'**une liaison en champ proche (22) est réalisée entre la première et la deuxième interface de communication en champ proche (20, 21), un ordre de commande est émis par le biais de la liaison en champ proche (22), et la priorité est accordée à cet ordre de commande par rapport à un ordre reçu par l'appareil de commande de soupape (2) par le biais de l'interface de bus (19).

9. Procédé selon la revendication 8, **caractérisé en ce qu'**une liaison mécanique est réalisée entre l'appareil de commande de soupape (2) et l'appareil d'accès (3).

10. Procédé selon la revendication 9, **caractérisé en ce qu'**une liaison en champ proche (22) est établie entre la première et la deuxième interface de communication en champ proche (20, 21) lorsque la liaison mécanique est présente.
